# EUROPÄISCHE PATENTSCHRIFT

(11) **EP 0 830 848 B1**
(45) Veröffentlichungstag und Bekanntmachung des Hinweises auf die Patenterteilung: **02.04.2003**
(21) Anmeldenummer: 97890125.4
(22) Anmeldetag: 07.07.1997
(51) Int. Cl.: A61C 1/05

(54) **Dentales Handstück**
Dental handpiece
Pièce à main dentaire

(30) Priorität: 24.09.1996 AT 169696
(43) Veröffentlichungstag der Anmeldung: 25.03.1998
(73) Patentinhaber: DENTALWERK BÜRMOOS GESELLSCHAFT M.B.H., 5111 Bürmoos (AT)
(72) Erfinder: Schwenoha, Martin, Ing., 5120 St. Pantaleon 11 (AT); Strohmeier, Josef, 5111 Bürmoos (AT); Brugger, Wilhelm, Dipl.-Ing. Dr.techn., 5101 Bergheim bei Salzburg (AT)
(74) Vertreter: Patentanwälte BARGER, PISO & PARTNER

(56) Entgegenhaltungen:
- EP-A- 0 629 383
- DE-C- 4 320 532
- US-A- 3 175 293

## Beschreibung

Die Erfindung betrifft ein zahnärztliches Handstück mit einer im Handstückkopf angeordneten, das Werkzeug in Rotation versetzenden Turbine, die werkzeugseitig und werkzeugabgewandt des Rotors in Gleit- bzw. Wälzlagern gelagert ist, mit einem Treibluftkanal für die Antriebsluft und einem Rückluftkanal für die Rückluft. Derartige Handstücke sind seit langem bekannt und haben sich bewährt.

Ein systemimmanenter Nachteil derartiger Turbinen ist es, daß beim Beenden eines Arbeitsvorganges, wenn die Antriebsluft durch Betätigen eines entsprechenden Ventiles in der Handstücksteuerung unterbrochen wird, die Turbine zufolge ihrer Massenträgheit nachläuft, wobei an der Außenseite des Turbinenrotors ein Überdruck und im achsnahen Bereich ein Unterdruck entsteht. Da der Rückluftkanal für die Rückluft im Rotoraußenbereich in die Turbinenkammer mündet, wird Luft vom auslaufenden Rotor im achsnahen Bereich durch alle im Handstück vorhandenen feinen Kanäle und Spalten angesaugt. Dadurch wird insbesondere Luft angesaugt, die mit Speichel und Blut des gerade behandelten Patienten kontaminiert ist und gelangt durch die Wälzlager in die Turbinenkammer und in den Rückluftkanal.

Beim Wiederinbetriebnehmen des Handstückes wird alle im Bereich der Turbinenkammer und der Lager verbliebene kontaminierte Luft und die abgesetzten Verunreinigungen durch den nunmehr in der gesamten Turbinenkammer aufgebauten Überdruck nach außen, in den Mund und schlimmstenfalls in eine bereits offene Wunde des nächsten Patienten geschleudert bzw. ausgeblasen.

Dieses Problem wurde schon vor einiger Zeit erkannt und es wurden eine ganze Reihe von Vorschlägen zur Beseitigung oder zumindest Verringerung dieses Problems geschaffen, die aber allesamt mit Nachteilen verbunden sind.

So ist es aus der DE 94 17 609.4 U1 bekannt, einen zusätzlichen Luftkanal vorzusehen, der im Bereich der Turbinenkammer unterhalb des Rotors, aber oberhalb des werkzeugseitigen Lagers mündet und dessen Querschnitt so beschaffen ist, daß beim Auslaufen der Turbine die Luft durch diesen Kanal und nicht entlang des Werkzeugschaftes durch die Lager angesaugt wird. Der große Nachteil dieser Lösung ist, daß im Betrieb die Strömungsverhältnisse in diesem zusätzlichen Kanal umgekehrt zum Auslaufzustand sind, so daß abgearbeitete Antriebsluft am schlauchseitigen Ende des Handstückes als starker Luftstrahl austritt, was für den Benutzer des Handstückes unangenehm ist. Außerdem wird beim Auslaufen des Rotors durch diesen Kanal Umgebungsluft angesaugt, die ebenfalls kontaminiert sein kann.

Aus der DE 43 19 084 A1 ist es bekannt, die Turbinenkammer möglichst gut abzudichten und darüberhinaus den Bereich des Durchtritts des Werkzeugschaftes durch das Handstückgehäuse mit speziellen Rippen bzw. Stegen zu versehen, um eine für wünschenswert gehaltene spezielle Luftströmung zu erhalten, die durch Abzweigungen von der Sprayluftzufuhr mitgebildet wird, um auch diese Bereiche zuverlässig vom Eindringen von Kontaminationen zu schützen. Die beiden großen Nachteile dieser Lösung sind zum einen die hohen Strömungswiderstände, die beim Durchströmen der Kugellager herrschen (dies ist der einzige Weg, der der Rückluft noch bleibt) und dadurch die Leistung der Turbine beeinträchtigen und zum anderen wird durch das Abströmen der Rückluft durch die Kugellager deren Lebensdauer vermindert, da das Öl aus den Lagern ausgblasen wird.

Eine andere Lösung ist aus der US 3 175 293 A bekanntgeworden, die eine magnetische Bremse für den Rotor aufweist, die beim Zusammenbruch des Überdrucks in der Turbinenkammer am Ende eines Arbeitsganges beim Abschalten der Antriebsluft einfällt und beim Wiederaufnehmen des Betriebes durch den sich aufbauenden Überdruck gelüftet wird. Abgesehen von den Problemen mit der Führung und Justierung dieser Bremse benötigt diese Konstruktion einen größeren Überdruck in der Turbinenkammer, um befriedigend zu arbeiten, wodurch der Turbinenwirkungsgrad begrenzt und beschränkt wird, auch der Aufwand beim Justieren und der Instandhaltung ist beträchtlich.

Aus der DE 43 20 532 C1 ist eine Drosselvorrichtung zwischen der Turbine und dem Rückluftkanal vorgesehen, die ihre Form oder Lage mit wechselnder Drehzahl ändert und so den Querschnitt des Rückluftkanals in diesem Bereich beeinflußt. Auf diese Weise wird nahezu eine Konstanthaltung der einmal eingestellten Drehzahl, auch bei Laständerungen, bewirkt. Als Nebeneffekt ist angegeben, daß durch diese Vorrichtung das Rücksaugphänomen vermieden wird. Dies ist darauf zurückzuführen, daß der Rückluftkanal an einer Stelle angeordnet ist, an der keine Sogwirkung entstehen kann, da im Überdruckbereich des Rotors die Luftabfuhr durch die geschlossene Turbinenkammer nicht möglich ist und deshalb auch keine Luft nachgefördert werden muß. Auch diese Anordnung weist das Problem der notwendigen feinen Justierung und der selbst für dentale Handstücke außergewöhnlich kleinen Toleranzen auf. Probleme, die sich durch das Ermüden der stetig elastisch beanspruchten, mit dem Rotor mitrotierenden Stellvorrichtung ergeben, sind dabei noch gar nicht ins Kalkül gezogen.

Aus der EP 0 629 383 A2 ist eine Handstückausbildung speziell zur Vermeidung des Rücksaugens im Auslaufvorgang bekanntgeworden, bei der, so wie bei der zuvor genannten DE-C1 und der eingangs genannten DE-U1 ein spezieller Rückluftkanal vorgesehen ist, der, axial gesehen, zwischen dem Rotor und dem werkzeugseitigen Lager in die Turbinenkammer mündet. Darüberhinaus ist der kreisringförmige Spalt, der sich unterhalb des Rotors normal zur Rotorachse zwischen der einen Stirnfläche des Rotors und der entsprechenden Stirnfläche des Rotorgehäuses erstreckt, mit einer deutlich vergrößerten Spaltbreite ausgebildet, wodurch im Auslaufzustand die radial nach außen, zur Zylinderwand hin gedrängte Luft wieder radial nach innen strömen kann, so daß im axialen Abstand vom Rotor der auftretende Unterdruck klein ist. Diese Ausführungsform hat wiederum den Nachteil, daß die Leistung der Turbine beeinträchtigt wird, da die Rückluft aufgrund der engen Querschnitte nur schwer abgeführt werden kann.

Ein zahnärztliches Handstück ganz anderer Art ist aus der DE 1 147 003 A bekannt: Es handelt sich um ein dentales Handstück mit Turbinenantrieb, wobei der Rotor luftgelagert ist. Durch eine entsprechende Steuerung wird erreicht, daß die Lagerluft auf Druck gebracht wird, bevor die Turbine sich in Bewegung setzt und auf Druck bleibt, bis die Turbine wieder zum Stillstand kommt. Es kann bei dieser Art der Lagerung einsichtigerweise nicht zum Auftreten eines Unterdruckes im Bereich des Werkzeugschaftes und damit auch nicht zum Ansaugen von Verunreinigungen kommen. Die Nachteile und Probleme der rein luftgelagerten Rotoren werden bei dieser Type von Handstück aus verschiedenen Gründen in Kauf genommen.

Aus der DE 1 107 891 A ist eine Steuerung für ein gattungsgemäßes dentales Handstück bekannt, bei dem im Moment des Ausschaltens der Antriebsluft der Rückluftkanal mit Druck beaufschlagt oder zumindest geschlossen wird, so daß die Luftbewegung im Turbinengehäuse nur zu einer inneren, geschlossenen Zirkulation oder sogar weiterhin zu einem Überdruck führt und das Ansaugen zuverlässig vermieden wird. Diese Maßnahme trifft aber nicht die Ausgestaltung eines entsprechenden dentalen Handstückes, sondern dessen Ansteuerung im Behandlungsstuhl, so daß sie bei vorgegebenen Behandlungsstühlen ohne derartige Steuerung für die Hersteller von Handstücken nichts bringt und nicht verfügbar ist.

Aus der EP 0 283 417 B1 ist es bekannt, einen Rotor als Trägheitsrad auszubilden und eine Bremse für dieses Trägheitsrad vorzusehen, die beim Abschalten der Antriebsluft einfällt und den Rotor, und damit das Werkzeug, nahezu augenblicklich zum Stillstand bringt. Über die Art der Unterbringung dieser voluminösen Vorrichtung in einem zahnärztlichen Handstückkopf ist nichts ausgeführt, sowohl die Zeichnungen (Handskizze) als auch die Beschreibung beschränken sich auf die rein schematische Darstellung des Rotors und der Bremse, ohne irgendeine Andeutung ihrer Umgebung. Von der Bremse ist sogar nur der Bremsklotz, ohne Lagerung od.dergl. gezeigt.

Aus der EP 0 471 916 B1 ist es bekannt, entlang des Werkzeugschaftes angesaugte Kontaminationen durch eine flanschartige Schleuderscheibe, die mit dem umlaufenden Werkzeughalter fest verbunden ist, in radialer Richtung aus dem Handstückgehäuse abzuschleudern und so das Eindringen in den Bereich des Rotors und der Lager zu verhindern. Diese auf den ersten Blick einfach und bestechend aussehende Maßnahme hat allerdings den Nachteil, daß es zu unangenehmen Sensationen auf der empfindlichen Mundschleimhaut des Patienten, auf die die Partikel geschleudert werden, kommt. Ein weitaus gravierenderer Nachteil ist aber, daß Luft und Keime trotzdem in das Instrument gelangen, da der Saugeffekt nicht unterbunden wird, sondern nur die Partikel abgeschleudert werden. Ein zusätzlicher Nachteil besteht darin, daß beim Auslaufen des Rotors der Schleudereffekt ebenfalls nachläßt und die Partikel gegebenenfalls an der Rotorwelle und der Schleuderscheibe hängen bleiben und schlimmstenfalls dem nächsten Patienten in den Mund geschleudert werden. Aus der EP 0 527 473 A1 ist die Verwendung einer Schleuderscheibe bekannt, die ganz analog zu der vorstehend beschriebenen Vorrichtung funktioniert und daher auch die gleichen Nachteile aufweist.

Aus der EP 0 497 139 B1 ist es bekannt, im Handstückkopf rund um den Werkzeugschaft eine elastische und im Ruhezustand am Werkzeugschaft ringsrum anliegende und ihn nach außen abdichtende Scheibe vorzusehen, die unter der Wirkung des sich im Werkzeugkopf im Betrieb ausbildenden Überdrucks soweit vom Werkzeugschaft abhebt, daß keine Berührung mehr auftritt. Beim Abschalten der Antriebsluft und dem daraus resultierenden Zusammenbrechen des Überdruckes im Werkzeugkopf legt sich diese Scheibe wieder an den noch rotierenden Werkzeugschaft und bremst ihn daher ab, während sie gleichzeitig das Eindringen von Verunreinigungen entlang des Werkzeugschaftes zufolge des sich ausbildenden Unterdruckes im Gehäuse verhindert. Diese Lösung erfordert eine extrem genaue Justierung der Scheibe bezüglich des Werkzeugkopfes, wobei im täglichen Betrieb immer mit ungewollten Berührungen während des Betriebs und daraus resultierenden unerwünschten Abbremsungen und Abnutzungen gerechnet werden muß, wodurch auch die Lebensdauer der Dichtscheibe drastisch reduziert wird. Da die Dichtscheibe im Werkzeugkopf gelagert und gehalten werden muß, sind zusätzliche Bauteile notwendig, die nicht nur Kosten verursachen, sondern auch Platz beanspruchen, was wieder dem Konzept, den Handstückkopf möglichst klein zu halten, widerspricht.

Die Erfindung bezweckt, hier Abhilfe zu schaffen und die eingangs genannten Ziele zu erreichen, ohne die mit den vorbekannten Lösungen verbundenen Probleme und Nachteile in Kauf nehmen zu müssen.

Erfindungsgemäß wird zu diesem Zwecke vorgeschlagen, zumindest eine Öffnung in der Turbinenkammerwand im achsnahen Bereich, mittels eines Verbindungskanals mit dem Rückluftkanal zu verbinden.

In einer ersten Variante, die die gleiche Grundidee der Erfindung verkörpert, mündet der Verbindungskanal in der Aufnahmebohrung des Handstückkopfes werkzeugseitig des werkzeugseitigen Lagers. Durch diese Maßnahme wird beim Auslaufen der Turbine nach dem Unterbrechen der Antriebsluft von der noch umlaufenden Turbine eine geschlossene Luftströmung von der Rotorperipherie über den Rückluftkanal, den Verbindungskanal und die achsnahe Öffnung in der Turbinenkammer geschaffen, durch deren Ausbildung im wesentlichen keine Luft entlang des Werkzeugschaftes und durch die Wälzlager in das Handstückinnere gesaugt wird. Es werden daher bei der nächsten Inbetriebnahme des Handstückes keine Verunreinigungen aus dem Handstückinneren ausgeblasen.

In einer vorteilhaften Ausgestaltung dieser ersten Variante ist die Turbinenkammer im Bereich der Öffnung für den Verbindungskanal als Ringraum ausgebildet, der mit der eigentlichen Turbinenkammer nur durch einen achsnahen Ringspalt in Verbindung steht. Diese Ausführungsform hat den Vorteil, daß im Betrieb durch den Verbindungskanal nur eine sehr geringfügige Luftmenge abströmt, da durch die Zentrifugalbeschleunigung die Antriebsluft zur Peripherie der Turbinenkammer geführt wird und im achsnahen Bereich ein wesentlich geringerer Überdruck herrscht, als im Umfangsbereich des Rotors. Auf diese Weise wird der Turbinenwirkungsgrad durch die erfindungsgemäße Maßnahme nur unmerklich beeinträchtigt.

Eine zweite Variante ist dadurch gekennzeichnet, daß auf der dem Werkzeug abgewandten Seite des Rotors ein Verbindungskanal zwischen dem Rückluftkanal und zumindest einer Öffnung im achsnahen Bereich der Turbinenkammer und/oder einem Hohlraum im Bereich des Betätigungsorgans für die Werkzeughalterung vorgesehen ist.

Die Erfindung wird im folgenden an Hand der Zeichnung näher erläutert. Dabei zeigt
die Fig. 1 eine erfindungsgemäße Ausbildung eines Handstückkopfes mit einfacher Einmündung des Verbindungskanals in einen achsnahen Bereich der Turbinenkammer,
die Fig. 2 eine erfindungsgemäße Ausführungsform, ähnlich der der Fig. 1 aber mit Ausbildung eines Ringkanals,
die Fig. 3 einen Schnitt entlang der Linie III-III in Fig. 1 und
die Fig. 4 einen Schnitt durch eine erfindungsgemäße Variante analog zur Darstellung der Fig. 1.

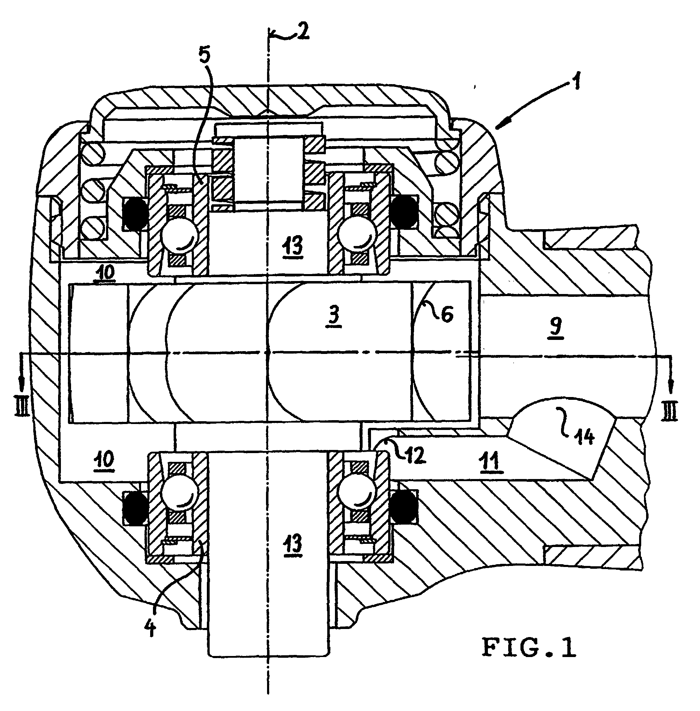

Fig. 1 ist ein Axialschnitt durch den Kopf 1 eines dentalen Handstückes. Um eine Achse 2 dreht sich ein Rotor 3 mit einer koaxial zur Achse 2 angeordneten, nicht dargestellten Aufnahme für den Schaft eines Werkzeuges.

Der Rotor 3 ist mit seinen Wellenstummeln 13 in Wälzlagern, im gezeigten Ausführungsbeispiel sind es Kugellager 4 und 5, gelagert. Das Kugellager 4 ist dabei zwischen dem eigentlichen Rotor 3 und dem Werkzeug vorgesehen, das Kugellager 5, auf der dem Werkzeug abgewandten Seite des Rotors. Auf dieser Seite befindet sich ein Druckknopfmechanismus, der für das Fixieren bzw. Freigeben des Werkzeugschaftes in der Werkzeugaufnahme dient, aber mit der Erfindung an sich nichts zu tun hat, so daß von einer näheren Beschreibung dieser Vorrichtung, die auch durch andere vom Stand der Technik bekannte Vorrichtungen ersetzt werden kann, an dieser Stelle nicht näher eingegangen wird.

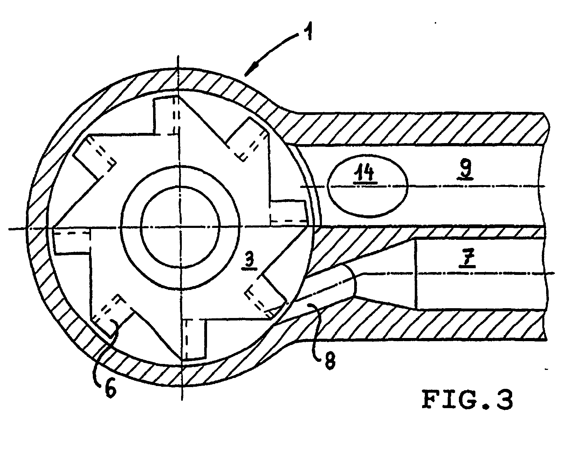

Der Rotor 3 weist Schaufeln oder Vertiefungen 6 auf, in die tangential die Treibluft aus dem Treibluftkanal 7, dessen Ende als Düse 8 ausgebildet ist, im wesentlichen tangential strömt (Fig. 3).

Zur Abfuhr der abgearbeiteten Treibluft ist ein Rückluftkanal 9 vorgesehen, der im wesentlichen mit dem Treibluftkanal 7 in einer gemeinsamen Normalebene zur Rotorachse 2, das entspricht der Papierebene der Fig. 3, liegt. In den Bereich der Turbinenkammer 10, der, axial gesehen, zwischen dem eigentlichen Rotor 3 und dem werkzeugseitigen Lager 4 liegt, mündet ein Verbindungskanal 11 mit einer Eintrittsöffnung 12, die, radial gesehen, nahe der Rotorwelle 13 im Gehäuse der Turbinenkammer 10 angeordnet ist. Der Verbindungskanal 11 mündet mit seinem anderen Ende mit einer Öffnung 14 im Rückluftkanal 9.

Die Strömungsquerschnitte und die Länge der Strömungswege von der Turbinenkammer 10, einerseits durch das Lager 4 und entlang des Wellenstummels 13 zum Werkzeugschaft und andererseits durch die Öffnung 12, den Verbindungskanal 11 und die Öffnung 14 sind so bemessen, daß der Strömungswiderstand des erstgenannten Strömungspfades ein Vielfaches des Strömungswiderstandes des zweitgenannten Strömungspfades ist. Es gelangt daher beim Entstehen von Unterdruck in der Turbinenkammer 10 nur ein entsprechend umgekehrt proportionaler Teil an Luft durch den erstgenannten Strömungspfad. Dieser an sich schon verschwindend kleine Anteil wird noch dadurch weiter reduziert, daß im Bereich der Öffnung 14, mit der der Verbindungskanal 11 in den RÜckluftkanal 9 mündet, während des Auslaufens des Rotors 3 bei abgeschalteter Treibluft, ein höherer Druck herrscht, als im Bereich des Werkzeugschaftes und des Wellenstummels 13 an der Außenseite des Kopfes 1 des dentalen Handstückes, so daß proportional zu diesem Druckunterschied das Verhältnis der durchströmenden Luftmengen nochmals zugunsten der durch den Verbindungskanal 11 strömenden Luftmenge erhöht wird.

Während des Betriebes, d.h. bei eingeschaltener Treibluftzufuhr im Zuluftkanal 7, gelangt unvermeidlich eine gewisse Luftmenge durch die Öffnung 12 der Turbinenkammer 10 in den Verbindungskanal 11 und sodann in den Rückluftkanal 9, doch ist diese Menge ohne praktische Bedeutung, da einerseits durch die achsnahe Anordnung der Öffnung 12 diese Verbindungsluft an einer Stelle mit geringem Druck anfällt, so daß das Druckgefälle zwischen der Öffnung 12 und der Öffnung 14 im Betrieb nur gering ist und daher der Wirkungsgrad der Turbine nicht merklich verschlechtert wird.

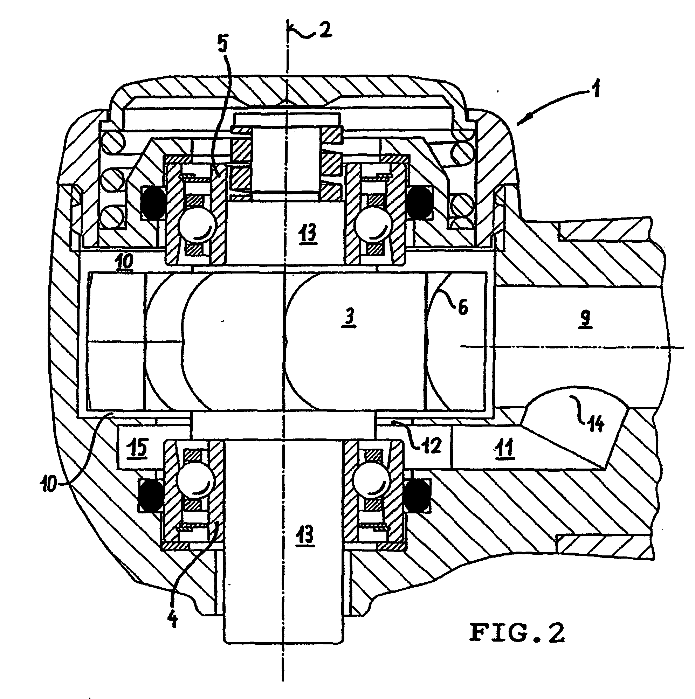

In Fig. 2 ist eine bevorzugte Anordnung angegeben, bei der die mit der Fig. 1 übereinstimmenden Elemente und Bauteile das gleiche Bezugszeichen wie in Fig. 1 tragen. Der Schnitt gemäß Fig. 3 trifft bei der gewählten Schnittführung auch auf die Ausführungsform gemäß Fig. 2 zu.

Der einzige Unterschied zur Ausführungsform gemäß Fig. 1 liegt darin, daß die Turbinenkammer 10 kleiner ausgebildet ist und den Rotor 3, in axialer Richtung gesehen, eng umfaßt und daß der Verbindungskanal 11 in einen Ringkanal 15 übergeht, der mit einer kreisringförmigen Verbindungsöffnung 12 mit der Turbinenkammer 10 in Verbindung steht. Durch diese Ausbildung wird eine im Bereich des Rotors 3 und des werkzeugseitigen Wellenstummels 13 sowie des werkzeugseitigen Lagers 4 besser symmetrisch bezüglich der Rotorachse 2 ausgebildete Rückströmung erreicht, wodurch noch besser als bei der Ausführungsform gemäß Fig. 1 sichergestellt wird, daß es an keiner Stelle der Peripherie des werkzeugseitigen Rotorschaftes 13 durch Turbulenzen, Schwingungen oder Druckstöße zur periodischen oder auch länger andauernden Ausbildung einer Strömung entlang des Wellenstummels 13 von der Umgebung des Werkzeugschaftes ins Innere des Werkzeugkopfes 1 kommt. Im Betrieb, bei Beaufschlagung mit Treibluft durch den Treibluftkanal 7, treten die gleichen günstigen Strömungsverhältnisse, wie sie an Hand des Ausführungsbeispieles gemäß Fig. 1 geschildert wurden, ein.

Wie aus den Figura ersichtlich, bedürfen die erfindungsgemäßen Maßnahmen keiner besonderen Bauteile, sondern sind durch spanende Bearbeitung oder Funkenerosion od.dgl. herstellbar. Der Platzbedarf ist minimal und fällt darüberhinaus an einer Stelle an, an der bei herkömmlichen dentalen Handstücken genügend Platz zur Unterbringung des Verbindungskanals 11 bzw. des Ringkanals 15 zur Verfügung steht.

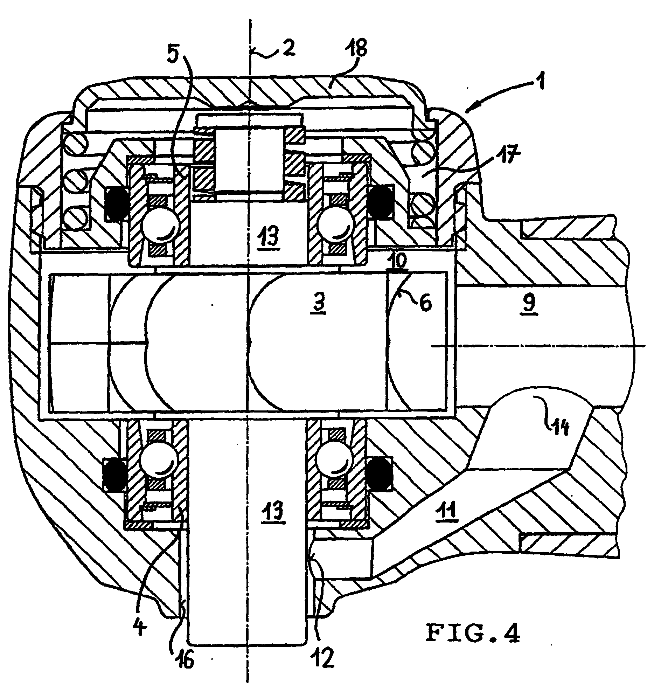

In Fig. 4 ist in einer Darstellung anaolg zur Fig. 1 eine erfindungsgemäß Variante dargestellt, bei der der Verbindungskanal 11 in der zylindrischen Wand 16 der Bohrung im Werkzeugkopf 1, in der der Wellenstummel 13 rotiert, mündet. Diese Variante hat den Vorteil, daß an den Abmessungen und der Ausgestaltung der Turbinenkammer 10 keinerlei Änderungen vorgenommen werden müssen. In einer Ausgestaltung kann der Verbindungskanal in einer ringförmigen Nut der Bohrung münden, wodurch die Achssymmetrie der Strömung verbessert wird.

Die Erfindung ist nicht auf das dargestellte Ausführungsbeispiel beschränkt, sondern kann verschiedentlich abgewandelt werden. So ist es insbesondere möglich, zwei Verbindungskanäle vorzusehen und so beispielsweise die beiden in den Figura 1 und 4 dargestellten Ausführungsbeispiele zu vereinen.

Es ist auch möglich, den Verbindungskanal auf der dem Werkzeug abgewandten Seite des Rotors vorzusehen. Wenn ein solcher erfindungsgemäßen Verbindungskanal passend angeordnet und bemessen ist, verhindert er nicht nur das Ansaugen kontaminierter Luft aus dem Bereich des Betätigungsdruckknopfes 18, sondern auch das Ansaugen kontaminierter Luft entlang des Werkzeugschaftes.

Da in diesem Bereich die Handstücke je nach verwendetem Spannmechanismus unterschiedlich ausgebildet sind und da der Fachmann auf dem Gebiet der Entwicklung in Kenntnis der Erfindung und des jeweiligen Handstückes einen solchen Verbindungskanal leicht vorsehen kann, ist auf die Angabe eines solchen Verbindungskanals in den Zeichnungen verzichtet worden. Er kann prinzipiell entweder im Bereich der Rotorkammer 10, analog zu Fig. 1, oder im Hohlraum 17 unterhalb des Betätigungsdruckknopfes 18 münden.

## Patentansprüche

1. Zahnärztliches Handstück mit einer im Handstückkopf (1) angeordneten, das Werkzeug in Rotation versetzenden, in einer Turbinenkammer (10) des Handstückkopfes (1) angeordneten Turbine (3), die werkzeugseitig und werkzeugabgewandt des Rotors (3) in Gleit- bzw. Wälzlagern (4, 5) gelagert ist, mit einem Treibluftkanal (7) für die Antriebsluft und einem in der Mantelfläche der Turbinenkammer (10) mündenden Rückluftkanal (9) für die Rückluft, **dadurch gekennzeichnet, daß** der Rückluftkanal (9) mittels eines Verbindungskanals (11) mit zumindest einer Öffnung (12) im achsnahen Bereich der Turbinenkammer (10) zwischen dem Rotor (3) und dem werkzeugseitigen Lager (4) verbunden ist.

2. Zahnärztliches Handstück mit einer im Handstückkopf (1) angeordneten, das Werkzeug in Rotation versetzenden, in einer Turbinenkammer (10) des Handstückkopfes (1) angeordneten Turbine (3), die werkzeugseitig und werkzeugabgewandt des Rotors (3) in Gleit- bzw. Wälzlagern (4, 5) gelagert ist, mit einem Treibluftkanal (7) für die Antriebsluft und einem in der Mantelfläche der Turbinerikammer (10) mündenden Rückluftkanal (9) für die Rückluft, **dadurch gekennzeichnet, daß** der Rückluftkanal (9) mittels eines Verbindungskanals (11) mit zumindest einer Öffnung (12) in der zylindrischen Wand (16) der Aufnahmebohrung des Handstückkopfes (1) werkzeugseitig des werkzeugseitigen Lagers (4) verbunden ist.

3. Zahnärztliches Handstück mit einer im Handstückkopf (1) angeordneten, das Werkzeug in Rotation versetzenden, in einer Turbinenkammer (10) des Handstückkopfes (1) angeordneten Turbine (3), die werkzeugseitig und werkzeugabgewandt des Rotors (3) in Gleit- bzw. Wälzlagern (4, 5) gelagert ist, mit einem Treibluftkanal (7) für die Antriebsluft und einem in der Mantelfläche der Turbinenkammer (10) mündenden Rückluftkanal (9) für die Rückluft, **dadurch gekennzeichnet, daß** der Rückluftkanal (9) mittels eines Verbindungskanals mit zumindest einer Öffnung im achsnahen Bereich der Turbinenkammer (10) und/oder einem Hohlraum (17) im Bereich des Betätigungsorgans (18) für die Werkzeughalterung auf der dem Werkzeug abgewandten Seite des Rotors (3) verbunden ist.

4. Zahnärztliches Handstück nach Anspruch 1, **dadurch gekennzeichnet, daß** der Verbindungskanal (11) im Bereich der Öffnung (12) als Ringraum (15) ausgebildet ist, und daß die Öffnung (12) die Form eines achsnahen Ringspaltes hat.

5. Zahnärztliches Handstück nach Anspruch 2, **dadurch gekennzeichnet, daß** der Verbindungskanal (11) in eine Ringnut in der zylindrischen Wand (16) mündet.

## Claims

1. A hand-operated dental device with a turbine (3) which is disposed in the head (1) of the hand-operated device, which imparts rotation to the tool and is disposed in a turbine chamber (10) of the head (1) of the hand-operated device, which turbine is mounted in plain or rolling bearings (4,5) on the tool side and on the side of the tool remote from the rotor (3), with an impelling air duct (7) for the propelling air and with an air-return duct (9) for the return air discharging in the circumferential surface of the turbine chamber (10), **characterised in that** the air-return duct (9) is connected by means of a connecting duct (11) to at least one opening (12) in the region of the turbine chamber (10) near the axis, between the rotor (3) and the tool-side bearing (4).

2. A hand-operated dental device with a turbine (3) which is disposed in the head (1) of the hand-operated device, which imparts rotation to the tool and is disposed in a turbine chamber (10) of the head (1) of the hand-operated device, which turbine is mounted in plain or rolling bearings (4,5) on the tool side and on the side of the tool remote from the rotor (3), with an impelling air duct (7) for the propelling air and with an air-return duct (9) for the return air discharging in the circumferential surface of the turbine chamber (10), **characterised in that** the air-return duct (9) is connected by means of a connecting duct (11) to at least one opening (12) in the cylindrical wall (16) of the accommodating bore of the head (1) of the hand-operated device on the tool side of the tool-side bearing (4).

3. A hand-operated dental device with a turbine (3) which is disposed in the head (1) of the hand-operated device, which imparts rotation to the tool and is disposed in a turbine chamber (10) of the head (1) of the hand-operated device, which turbine is mounted in plain or rolling bearings (4,5) on the tool side and on the side of the tool remote from the rotor (3), with an impelling air duct (7) for the propelling air and an air-return duct (9) for the return air discharging in the circumferential surface of the turbine chamber (10), **characterised in that** the air-return duct (9) is connected by means of a connecting duct to at least one opening in the region of the turbine chamber (10) near the axis and/or a cavity (17) in the vicinity of the actuation member (18) for mounting the tool on the side of the rotor (3) remote from the tool.

4. A hand-operated dental device according to Claim 1, **characterised in that** in the vicinity of the opening (12) the connecting duct (11) is in the form of an annular chamber (15), and **in that** the opening (12) takes the form of an annular clearance near the axis.

5. A hand-operated dental device according to Claim 2, **characterised in that** the connecting duct (11) discharges into an annular groove in the cylindrical wall (16).

## Revendications

1. Pièce à main dentaire comprenant une turbine (3) agencée dans la tête (1) de la pièce à main, faisant tourner l'outil et agencée dans une chambre à turbine (10) de la tête (1) de la pièce à main, ladite turbine étant montée du côté du rotor (3) tourné vers l'outil et du côté du rotor (3) détourné de l'outil, dans des paliers à glissement et à roulement (4, 5) respectifs, comprenant un canal d'éjection d'air (7) pour l'air d'entraînement et un canal de retour d'air (9) pour l'air de retour, débouchant dans la surface enveloppe de la chambre à turbine (10), **caractérisée en ce que** le canal d'air de retour (9) est relié au moyen d'un canal de liaison (11) à au moins une ouverture (12) dans la région proche de l'axe, de la chambre à turbine (10) entre le rotor (3) et le palier côté outil (4).

2. Pièce à main dentaire comprenant une turbine (3) agencée dans la tête (1) de la pièce à main, faisant tourner l'outil et agencée dans une chambre à turbine (10) de la tête (1) de la pièce à main, ladite turbine étant montée du côté du rotor (3) tourné vers l'outil et du côté du rotor (3) détourné de l'outil, dans des paliers à glissement et à roulement (4, 5) respectifs, comprenant un canal d'éjection d'air (7) pour l'air d'entraînement et un canal de retour d'air (9) pour l'air de retour, débouchant dans la surface enveloppe de la chambre à turbine (10), **caractérisée en ce que** le canal d'air de retour (9) est relié au moyen d'un canal de liaison (11) à au moins une ouverture (12) dans la paroi cylindrique (16) du perçage de réception de la tête (1) de la pièce à main côté outil du palier (4) côté outil.

3. Pièce à main dentaire comprenant une turbine (3) agencée dans la tête (1) de la pièce à main, faisant tourner l'outil et agencée dans une chambre à turbine (10) de la tête (1) de la pièce à main, ladite turbine étant montée du côté du rotor (3) tourné vers l'outil et du côté du rotor (3) détourné de l'outil, dans des paliers à glissement et à roulement (4, 5) respectifs, comprenant un canal d'éjection d'air (7) pour l'air d'entraînement et un canal de retour d'air (9) pour l'air de retour, débouchant dans la surface enveloppe de la chambre à turbine (10), **caractérisée en ce que** le canal d'air de retour (9) est relié au moyen d'un canal de liaison (11) à au moins une ouverture dans la région proche de l'axe, de la chambre à turbine (10) et/ou à une cavité (17) dans la région de l'organe d'actionnement (18) pour le porte-outil sur le côté du rotor (3), qui est détourné de l'outil.

4. Pièce à main dentaire selon la revendication 1, **caractérisée en ce que** le canal de liaison (11) dans la région de l'ouverture (12) est réalisé sous forme de chambre annulaire (15), et **en ce que** l'ouverture (12) a la forme d'une fente annulaire proche de l'axe.

5. Pièce à main dentaire selon la revendication 2, **caractérisée en ce que** le canal de liaison (11) débouche dans une gorge annulaire de la paroi cylindrique (16).
